# EUROPEAN PATENT APPLICATION

(11) **EP 4 202 108 A1**
(43) Date of publication of application: **28.06.2023**
(21) Application number: 21874179.1
(22) Date of filing: 03.09.2021
(51) Int. Cl.: D06F 39/08, D06F 23/02

(54) **CONTROL METHOD FOR FRONT LOADING WASHING MACHINE, AND FRONT LOADING WASHING MACHINE AND COMPUTER STORAGE MEDIUM**

(30) Priority: 30.09.2020 CN 202011067687
(71) Applicant: Wuxi Little Swan Electric Co., Ltd., Wuxi, Jiangsu 214028 (CN)
(72) Inventor: JIANG, Li, Wuxi, Jiangsu 214028 (CN); XUE, Erpeng, Wuxi, Jiangsu 214028 (CN); ZHOU, Cunling, Wuxi, Jiangsu 214028 (CN); ZHOU, Wei, Wuxi, Jiangsu 214028 (CN); YANG, Weiguo, Wuxi, Jiangsu 214028 (CN); WANG, Jia, Wuxi, Jiangsu 214028 (CN); KANG, Fei, Wuxi, Jiangsu 214028 (CN)
(74) Representative: Whitlock, Holly Elizabeth Ann
(86) International application number: PCT/CN2021/116358
(87) International publication number: WO 2022/068518

(57) **Abstract**

A control method for a front loading washing machine, and the front loading washing machine and a computer storage medium. The front loading washing machine (1800) comprises an inner tub (1820) and an outer tub (1810), the inner tub (1820) is disposed in the outer tub (1810), and water in the inner tub (1820) can overflow into the outer tub (1810). The control method comprises: controlling the front loading washing machine (1800) to execute washing work, and obtaining a corresponding washing duration; and on the basis of the case that the washing duration is greater than or equal to a duration threshold, controlling the outer tub (1810) to drain off water, and replenishing water for the inner tub (1820). By setting a duration threshold, after a washing duration is greater than or equal to the duration threshold, water replenishment work is performed, and in this way, the problem of when to replenish water, i.e., whether to replenish water, can be solved. It can be understood that, after washing for a certain period of time, a water inlet step is executed again, so as to achieve water replenishment. The inner tub (1820) is replenished with water after washing starts, so that the water level of the inner tub (1820) can be maintained at an optimum water level height, thus effectively improving the washing effect.

## Description

The present disclosure claims the priority of Chinese Patent Application No. 202011067687.2, filed with the Chinese Patent Office on September 30, 2020 and entitled "Control method for drum washing machine, drum washing machine and computer storage medium", which is incorporated in its entirety herein by reference.

### FIELD

The present disclosure relates to the technical field of washing machines, and particularly to a control method for a drum washing machine, the drum washing machine and a computer-readable storage medium.

### BACKGROUND

In the related art, water is supplied into an inner tub of a washing machine to reach a proper water level before washing. In a water supply process, clothes in the drum are less likely to fully absorb water due to a water absorption effect of the clothes. Subsequently, in a washing process, the clothes further absorb water. Accordingly, the water level of the inner tub is lower than an optimal washing water level, and a poor washing effect is rendered.

### SUMMARY

The present disclosure aims to solve at least one of the technical problems in the prior art or the related art.

In view of this, a first aspect of the present disclosure provides a control method for a drum washing machine.

A second aspect of the present disclosure provides the drum washing machine.

A third aspect of the present disclosure provides a computer-readable storage medium.

In view of this, the first aspect of the present disclosure provides a control method for a drum washing machine. The drum washing machine includes an inner tub and an outer tub, the inner tub is arranged within the outer tub, and water in the inner tub may overflow into the outer tub. The control method includes: controlling the drum washing machine to perform washing work, and obtaining corresponding washing duration; and controlling the outer tub to discharge water under the condition that the washing duration is greater than or equal to a duration threshold, and replenishing water to the inner tub.

According to an embodiment of a control method for a drum washing machine provided in the present disclosure, the drum washing machine includes the inner tub and the outer tub, the inner tub is arranged within the outer tub, and the water in the inner tub may overflow into the outer tub. It can be understood that a tub wall of the inner tub is not provided with a communication hole, and the inner tub is not in communication with the outer tub by a communication hole. After water is supplied into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

In addition, the control method includes: controlling the drum washing machine to perform washing work, and obtaining corresponding washing duration; and controlling the outer tub to discharge water under the condition that the washing duration is greater than or equal to a duration threshold, and replenishing water to the inner tub. It can be understood that by setting the duration threshold, after the washing duration is greater than or equal to the duration threshold, water replenish work is carried out. This method may solve the problem of when to replenish water, that is, whether to replenish water.

During water replenish work, water in the outer tub is discharged first, and then water is supplied to the inner tub and most of washing dirt may be discharged. Then, a next procedure is carried out, and a washing effect is better.

A whole washing process may include a plurality of washing stages, each washing stage corresponds to washing duration, and when the washing duration is greater than or equal to the duration threshold every time, water is changed once, which is beneficial to removal of dirt on clothes, and a washing effect is better.

According to embodiments of the present disclosure, after washing is started, water is supplied to the inner tub and the water level of the inner tub may be kept at the optimal water level, and a washing effect is effectively improved.

In addition, the control method for a drum washing machine in the above embodiment provided in the present disclosure may further have additional technical features as follows:
in the above embodiment, the inner tub is a non-porous inner tub, and the replenishing water to the inner tub specifically includes: keeping replenishing water to the inner tub, and obtaining a first water level in the outer tub; and stopping replenishing water to the inner tub under the condition that the first water level is greater than or equal to a first water level threshold.

In the embodiment, the inner tub is the non-porous inner tub, that is, a tub wall of the inner tub is not provided with a communication hole, and the inner tub is not in communication with the outer tub by a communication hole. In addition, the replenishing water to the inner tub specifically includes: keeping replenishing water to the inner tub, and obtaining a first water level in the outer tub; and stopping replenishing water to the inner tub under the condition that the first water level is greater than or equal to a first water level threshold. In other words, after water keeps being supplied to the inner tub, the water in the inner tub starts overflowing outwards after reaching a certain height, the water overflowing outwards enters the outer tub, a first water level in the outer tub is obtained, and when the first water level is greater than or equal to a first water level threshold, it is inferred that there is a sufficient amount of water in the inner tub, that is, a water amount reaches the standard, and water replenish to the inner tub is stopped. It can be understood that by obtaining the water level in the outer tub, when to stop water replenish in a water replenish process is determined. The solution may save more water than a fixed water replenish procedure. Compared with a traditional mode that an inner tub and an outer tub are in communication with each other by a communication hole, a water level sensor is still arranged within the outer tub, and a change is relatively small, and clothes may be fully wetted by replenishing water once at intervals.

In the above embodiment, the controlling the outer tub to discharge water, and the replenishing water to the inner tub specifically include: controlling the outer tub to discharge water, and obtaining a second water level in the outer tub; and controlling the outer tub to stop discharging water under the condition that the second water level is less than a second water level threshold, and starting replenishing water to the inner tub until the water level in the outer tub is greater than or equal to the first water level threshold.

In the above embodiment, the outer tub is controlled to discharge water, and the second water level in the outer tub is obtained. When the second water level is less than the second water level threshold, water discharge from the outer tub is stopped. Then, water starts being supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

In the above embodiment, before controlling the drum washing machine to perform washing work, the control method further includes: controlling the outer tub to discharge water, and controlling the inner tub to spin relative to the outer tub; and supplying water into the inner tub.

In the embodiment, before the drum washing machine is controlled to perform washing work, water in the outer tub is discharged once, that is, it is ensured that the water left in the outer tub in a previous washing process is completely discharged, and this washing process may not be influenced by the previous washing process. Since the controlling the inner tub to spin relative to the outer tub is before the step of supplying water into the inner tub, it can be understood that the inner tub and the outer tub do not relatively spin before the water is supplied into the inner tub. When the water is supplied into the inner tub or after the water is supplied for a period of time, the inner tub and the outer tub may relatively spin, that is, washing is started.

In the above embodiment, working modes of the drum washing machine include a wash mode, a rinse mode and a dewatering mode; and in the wash mode, the controlling the drum washing machine to replenish water to the inner tub is performed.

In the embodiment, the working modes of the drum washing machine include the wash mode, the rinse mode and the dewatering mode, that is, the drum washing machine has a corresponding wash function, rinse function and dewatering function.

In the wash mode, the controlling the drum washing machine to replenish water to the inner tub is performed, in other words, water is supplied to the inner tub at intervals in a washing process. Since water is fed into the washing machine before washing is started, and in a water feed process, it is not ensured that the clothes completely absorb water, that is, the clothes are completely in a wetted state, in a washing process, the water level of the inner tub may be declined due to further water absorption of the clothes, and quantitative water replenish after a period of time may ensure a washing effect.

In the above embodiment, the first water level threshold is greater than the second water level threshold.

In the embodiment, the water level of the outer tub is obtained and compared with the first water level threshold and the second water level threshold, and when the water level of the outer tub is lower than the second water level threshold, water discharge from the outer tub is stopped, and water supply into the inner tub is started. When the water level of the outer tub is greater than the first water level threshold, water supply into the inner tub is stopped, and a next procedure is started.

Specifically, according to the first water level threshold being greater than the second water level threshold, when to start and stop water replenish work may be determined, to ensure normal operation of water replenish.

In the above embodiment, the step of keeping supplying water to the inner tub specifically includes: keeping supplying water into the inner tub according to a set flow rate; and the keeping replenishing water to the inner tub specifically includes: keeping replenishing water into the inner tub according to a set flow rate.

In the embodiment, the water keeps being supplied into the inner tub according to the set flow rate and the water keeps being supplied to the inner tub according to the set flow rate, that is, in a water supply process and a water replenish process, a water flow rate in unit time is fixed and a water supply amount or a water replenish amount may be determined according to water supply duration or water replenish duration in a program.

An embodiment of the second aspect of the present disclosure provides a drum washing machine. The drum washing machine includes: a memory, configured to store a computer program; and a processor, configured to implement the control method for a drum washing machine in any one of the above embodiments when executing the computer program.

According to an embodiment of the control method for a drum washing machine provided in the present disclosure, the drum washing machine includes the memory and the processor. The memory is configured to store a computer program. The processor is configured to implement the control method for a drum washing machine when executing the computer program. By keeping quantitatively replenishing water in a washing process, loads having different weights and made of different materials may be satisfied, that is, clothes may be fully wetted, and a washing effect is better.

In the above embodiment, the drum washing machine further includes: an outer tub, where a water level sensor is arranged within the outer tub; and an inner tub rotatably arranged within the outer tub, where water in the inner tub may overflow into the outer tub; where the inner tub is a non-porous inner tub.

In the embodiment, the drum washing machine further includes the outer tub and the inner tub. The inner tub is a non-porous inner tub, the inner tub is rotatably arranged within the outer tub, and water in the inner tub may overflow into the outer tub. It can be understood that the inner tub is not in communication with the outer tub by a communication hole, and after water is supplied into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

An embodiment of the third aspect of the present disclosure provides a computer-readable storage medium. The computer program may implement the control method for a drum washing machine in any one of the above embodiments when executed by a processor.

According to an embodiment of a control method for a drum washing machine provided in the present disclosure, the computer program may implement the control method for a drum washing machine when executed by a processor. A water amount required for washing clothes this time is determined according to first water feed duration, and water replenish duration in a washing process is determined according to water supply duration, and water may be quantitatively supplied according to a set program.

By keeping quantitatively replenishing water in a washing process, loads having different weights and made of different materials may be satisfied, that is, clothes may be fully wetted.

### BRIEF DESCRIPTION OF THE DRAWINGS

The above and/or additional aspects and advantages of the present disclosure will become apparent and readily understandable in the description of embodiments taken in combination with the following accompanying drawings.
Fig. 1 shows a schematic flowchart of a control method for a drum washing machine according to an embodiment of the present disclosure;
Fig. 2 shows a schematic flowchart of a control method for a drum washing machine according to another embodiment of the present disclosure;
Fig. 3 shows a schematic flowchart of a control method for a drum washing machine according to yet another embodiment of the present disclosure;
Fig. 4 shows a schematic flowchart of a control method for a drum washing machine according to yet another embodiment of the present disclosure;
Fig. 5 shows a schematic flowchart of a control method for a drum washing machine according to yet another embodiment of the present disclosure;
Fig. 6 shows a schematic flowchart of a control method for a drum washing machine according to yet another embodiment of the present disclosure;
Fig. 7 shows a schematic flowchart of a control method for a drum washing machine according to yet another embodiment of the present disclosure;
Fig. 8 shows a schematic flowchart of a control method for a drum washing machine according to yet another embodiment of the present disclosure;
Fig. 9 shows a schematic flowchart of a control method for a drum washing machine according to yet another embodiment of the present disclosure;
Fig. 10 shows a schematic flowchart of a control method for a drum washing machine according to yet another embodiment of the present disclosure;
Fig. 11 shows a schematic flowchart of a control method for a drum washing machine according to yet another embodiment of the present disclosure;
Fig. 12 shows a schematic flowchart of a control method for a drum washing machine according to yet another embodiment of the present disclosure;
Fig. 13 shows a schematic flowchart of a control method for a drum washing machine according to yet another embodiment of the present disclosure;
Fig. 14 shows a schematic flowchart of a control method for a drum washing machine according to yet another embodiment of the present disclosure;
Fig. 15 shows a schematic flowchart of a control method for a drum washing machine according to still another embodiment of the present disclosure;
Fig. 16 shows a schematic structural diagram of a drum washing machine according to an embodiment of the present disclosure.

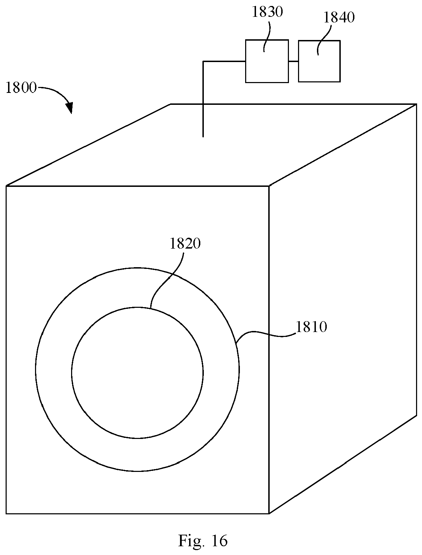

Corresponding relations between reference numerals in Fig. 16 and components are as follows:
1800: drum washing machine; 1810: outer tub, 1820: inner tub; 1830: memory; and 1840: processor.

### DETAILED DESCRIPTION OF THE INVENTION

In order to more clearly understand the above objectives, features and advantages of the present disclosure, the present disclosure will be further described in detail below in combination with accompanying drawings and particular implementation modes. It should be noted that embodiments of the present disclosure and features in the embodiments can be combined with one another if there is no conflict.

Many specific details are set forth in the following description to facilitate full understanding of the present disclosure, but the present disclosure can further be implemented in other ways different from those described herein, and therefore the scope of protection of the present disclosure is not limited by the particular embodiments disclosed below.

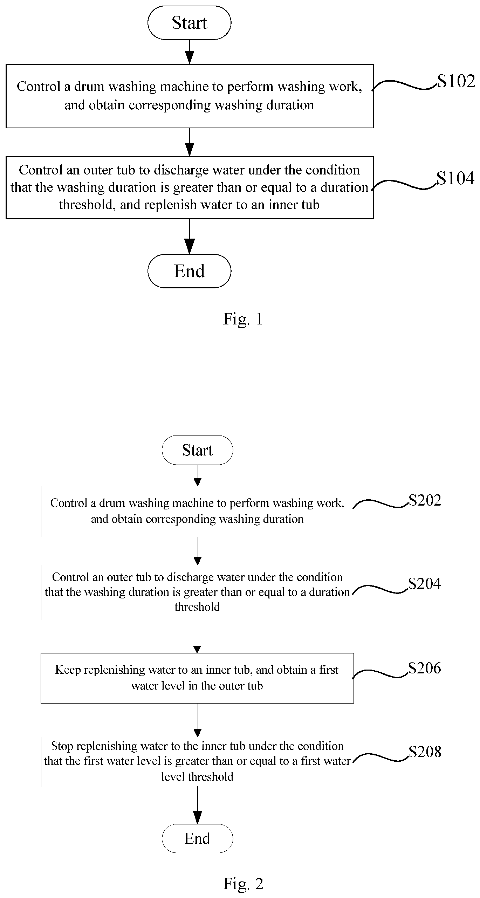

A control method for a drum washing machine, the drum washing machine and a computer-readable storage medium according to some embodiments of the present disclosure will be described below with reference to Figs. 1-16.

### Embodiment 1

As shown in Fig. 1, an embodiment of the present disclosure provides a control method for a drum washing machine. The drum washing machine includes an inner tub and an outer tub, the inner tub is arranged within the outer tub, and water in the inner tub may overflow into the outer tub. It can be understood that a tub wall of the inner tub is not provided with a communication hole, and the inner tub is not in communication with the outer tub by a communication hole. After water is supplied into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

In addition, the control method includes:
step S102: control a drum washing machine to perform washing work, and obtain corresponding washing duration; and
step S104: control an outer tub to discharge water under the condition that the washing duration is greater than or equal to a duration threshold, and replenish water to an inner tub.

It can be understood that by setting the duration threshold, after the washing duration is greater than or equal to the duration threshold, that is, after a period of washing work, the washing machine is controlled to carry out water replenish work, to ensure that a water amount of the inner tub may still satisfy an optimal water level of the washing work after the clothes fully absorb the water, and a washing effect is ensured.

Specifically, since the inner tub spins in a washing process, some water in the inner tub may be splashed into the outer tub, resulting in water level rise of the outer tub. Therefore, before water replenish is carried out, water in the outer tub is discharged first and the water level of the outer tub may return to an initial water level. Thus, in a process of replenishing water to the inner tub, the situation that the initial water level of the outer tub is changed due to water splashed out of the inner tub in a washing process may be avoided, and whether water replenish to the inner tub is ended may be determined according to the water level of the outer tub.

In a case where water stored in the outer tub may be completely discharged, a default water level is a 0 water level.

According to embodiments of the present disclosure, after washing is started, water is supplied to the inner tub and the water level of the inner tub may be kept at the optimal water level, and a washing effect is effectively improved.

As shown in Fig. 2, an embodiment of the present disclosure provides a control method for a drum washing machine. Specifically, the control method includes:
step S202: control a drum washing machine to perform washing work, and obtain corresponding washing duration;
step S204: control an outer tub to discharge water under the condition that the washing duration is greater than or equal to a duration threshold;
step S206: keep replenishing water to an inner tub, and obtain a first water level in the outer tub; and
step S208: stop replenishing water to the inner tub under the condition that the first water level is greater than or equal to the first water level threshold.

After water keeps being supplied to the inner tub, the water in the inner tub starts overflowing outwards after reaching a certain height, the water overflowing outwards enters the outer tub, a first water level in the outer tub is obtained, and when the first water level is greater than or equal to a first water level threshold, it is inferred that there is a sufficient amount of water in the inner tub, that is, a water amount reaches the standard, and water replenish to the inner tub is stopped. It can be understood that by obtaining the water level in the outer tub, when to stop water replenish in a water replenish process is determined. The solution may save more water than a fixed water replenish procedure. Compared with a traditional mode that an inner tub and an outer tub are in communication with each other by a communication hole, a water level sensor is still arranged within the outer tub, and a change is relatively small, and clothes may be fully wetted through a water replenish operation.

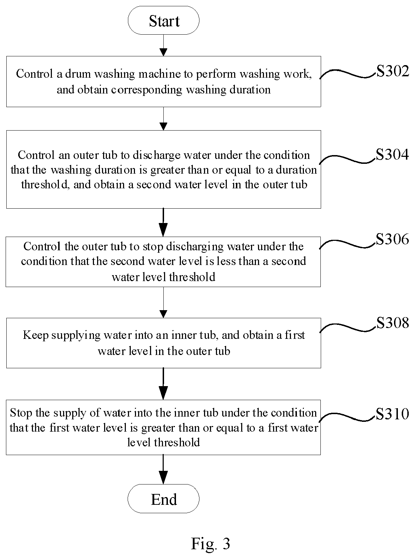

As shown in Fig. 3, an embodiment of the present disclosure provides a control method for a drum washing machine. Specifically, the control method includes:
step S302: control a drum washing machine to perform washing work, and obtain corresponding washing duration;
step S304: control an outer tub to discharge water under the condition that the washing duration is greater than or equal to a duration threshold, and obtain a second water level in the outer tub;
step S306: control the outer tub to stop discharging water under the condition that the second water level is less than a second water level threshold;
step S308: keep supplying water into an inner tub, and obtain a first water level in the outer tub; and
step S310: stop the supply of water into the inner tub under the condition that the first water level is greater than or equal to a first water level threshold.

It can be understood that by setting the duration threshold, after the washing duration is greater than or equal to the duration threshold, water replenish work is carried out. This method may solve the problem of when to replenish water, that is, whether to replenish water.

The outer tub is controlled to discharge water, and a second water level in the outer tub is obtained. When the second water level is less than the second water level threshold, water discharge from the outer tub is stopped. Then, water starts being supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

When to stop water replenish in a water replenish process is determined by obtaining the water level in the outer tub. The solution may save more water than a fixed water replenish procedure. Compared with a traditional mode that an inner tub and an outer tub are in communication with each other by a communication hole, a water level sensor is still arranged within the outer tub, and a change is relatively small, and clothes may be fully wetted by replenishing water once at intervals.

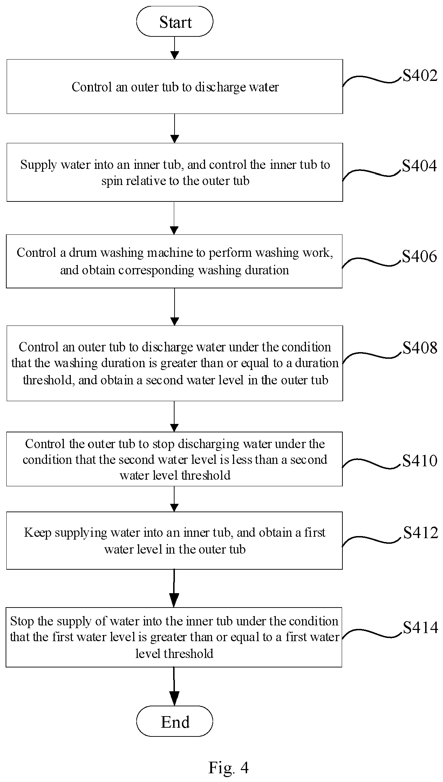

As shown in Fig. 4, in an embodiment of the present disclosure, specifically,
the control method includes:
step S402: control an outer tub to discharge water;
step S404: supply water into an inner tub, and control the inner tub to spin relative to the outer tub;
step S406: control a drum washing machine to perform washing work, and obtain corresponding washing duration;
step S408: control an outer tub to discharge water under the condition that the washing duration is greater than or equal to a duration threshold, and obtaining a second water level in the outer tub;
step S410: control the outer tub to stop discharging water under the condition that the second water level is less than a second water level threshold;
step S412: keep supplying water into an inner tub, and obtain a first water level in the outer tub; and
step S414: stop the supply of water into the inner tub under the condition that the first water level is greater than or equal to a first water level threshold.

It can be understood that by setting the duration threshold, after the washing duration is greater than or equal to the duration threshold, water replenish work is carried out. This method may solve the problem of when to replenish water, that is, whether to replenish water.

Before the drum washing machine is controlled to perform washing work, water in the outer tub is discharged once, that is, it is ensured that the water left in the outer tub in a previous washing process is completely discharged, and this washing process may not be influenced by the previous washing process. When water is supplied into the inner tub, the inner tub is controlled to spin relative to the outer tub and clothes in the inner tub may be fully wetted. The outer tub is controlled to discharge water, and a second water level in the outer tub is obtained. When the second water level is less than the second water level threshold, water discharge from the outer tub is stopped. Then, water starts being supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

When to stop water replenish in a water replenish process is determined by obtaining the water level in the outer tub. The solution may save more water than a fixed water replenish procedure. Compared with a traditional mode that an inner tub and an outer tub are in communication with each other by a communication hole, a water level sensor is still arranged within the outer tub, and a change is relatively small, and clothes may be fully wetted through a water replenish operation.

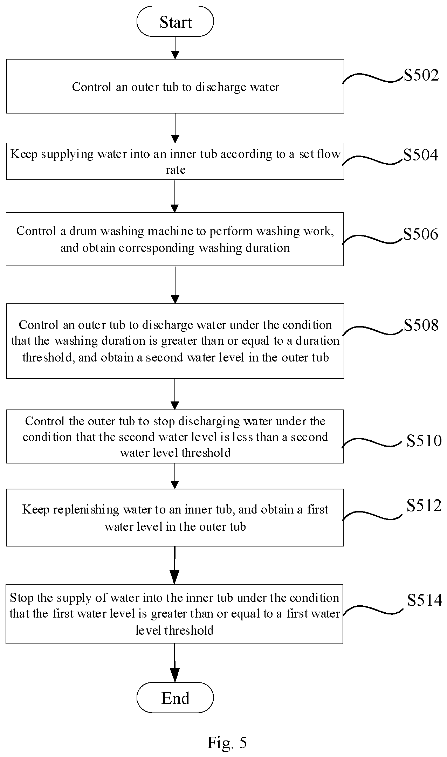

As shown in Fig. 5, an embodiment of the present disclosure provides a control method for a drum washing machine. Specifically, the control method includes:
step S502: control an outer tub to discharge water;
step S504: keep supplying water into an inner tub according to a set flow rate;
step S506: control a drum washing machine to perform washing work, and obtain corresponding washing duration;
step S508: control an outer tub to discharge water under the condition that the washing duration is greater than or equal to a duration threshold, and obtain a second water level in the outer tub;
step S510: control the outer tub to stop discharging water under the condition that the second water level is less than a second water level threshold;
step S512: keep replenishing water to an inner tub, and obtain a first water level in the outer tub; and
step S514: stop the supply of water into the inner tub under the condition that the first water level is greater than or equal to a first water level threshold.

In an embodiment of the present disclosure, working modes of the drum washing machine include a wash mode, a rinse mode and a dewatering mode, that is, the drum washing machine has a corresponding wash function, rinse function and dewatering function. In the wash mode, the step of controlling the drum washing machine to replenish water to the inner tub is performed, in other words, water is supplied to the inner tub at intervals in a washing process. Since water is fed into the washing machine before washing is started, and in a water feed process, it is not ensured that the clothes completely absorb water, that is, the clothes are completely in a wetted state, in a washing process, the water level of the inner tub may be declined due to further water absorption of the clothes, and quantitative water replenish after a period of time may ensure a washing effect.

Specifically, by setting the duration threshold, after the washing duration is greater than or equal to the duration threshold, water replenish work is carried out. This method may solve the problem of when to replenish water, that is, whether to replenish water. It can be understood that by setting the duration threshold, after the washing duration is greater than or equal to the duration threshold, water replenish work is carried out. This method may solve the problem of when to replenish water, that is, whether to replenish water.

Before the drum washing machine is controlled to perform washing work, water in the outer tub is discharged once, that is, it is ensured that the water left in the outer tub in a previous washing process is completely discharged, and this washing process may not be influenced by the previous washing process. Since the step of controlling the inner tub to spin relative to the outer tub is before the step of supplying water into the inner tub, it can be understood that the inner tub and the outer tub do not relatively spin before water is supplied into the inner tub. When the water is supplied into the inner tub or after the water is supplied for a period of time, the inner tub and the outer tub may relatively spin, that is, washing is started.

The outer tub is controlled to discharge water, and a second water level in the outer tub is obtained. When the second water level is less than the second water level threshold, water discharge from the outer tub is stopped. Then, water starts being supplied to the inner tub until the water level in the outer tub is greater than or equal to the first water level threshold. It can be understood that in a whole water change process, that is, in a process of discharging water from the outer tub and feeding water into the inner tub, the water in the outer tub may not be completely discharged, and waste of water is avoided. Moreover, when to stop discharging water from the outer tub and when to feed water into the inner tub are determined by observing the water level of the outer tub.

Specifically, according to the first water level threshold being greater than the second water level threshold, when to start and stop water replenish work may be determined, to ensure normal operation of water replenish.

When to stop water replenish in a water replenish process is determined by obtaining the water level in the outer tub. The solution may save more water than a fixed water replenish procedure. Compared with a traditional mode that an inner tub and an outer tub are in communication with each other by a communication hole, a water level sensor is still arranged within the outer tub, and a change is relatively small, and clothes may be fully wetted by replenishing water once at intervals.

The water keeps being supplied into the inner tub according to a set flow rate, that is, in a water supply process, a flow rate is limited and the water supply process may be effectively controlled, insufficient water supply or excessive water supply caused by a sharp change of a flow rate is avoided, and a water saving effect may be achieved on the premise that water supply satisfies requirements.

### Embodiment 2

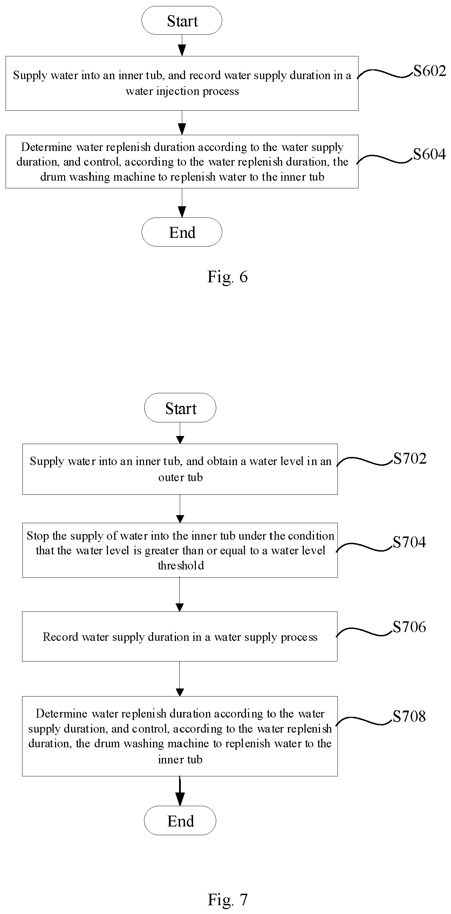

As shown in Fig. 6, an embodiment of the present disclosure provides a control method for a drum washing machine. The drum washing machine includes an inner tub. The control method includes:
step S602: supply water into an inner tub, and record water supply duration in a water supply process; and
step S604: determine water replenish duration according to the water supply duration, and control, according to the water replenish duration, the drum washing machine to replenish water to the inner tub.

In the embodiment, a water amount required for washing clothes this time is determined according to first water feed duration, and water replenish duration in a washing process is determined according to the water supply duration, and water may be quantitatively supplied according to a set program.

By carrying out water replenish according to a determined water replenish amount in a washing process, when clothes made of different materials and having different weight are washed, the water amount of the inner tub may always satisfy the optimal washing requirement, and a washing effect is better.

As shown in Fig. 7, in an embodiment of the present disclosure, the inner tub is a non-porous inner tub, that is, a tub wall of the inner tub is not provided with a communication hole, the non-porous inner tub is arranged within the outer tub, and water in the non-porous inner tub may overflow into the outer tub.

It can be understood that the inner tub is not in communication with the outer tub by a communication hole, and after water is supplied into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

Specifically, the control method for a drum washing machine includes:
step S702: supply water into an inner tub, and obtain a water level in the outer tub;
step S704: stop the supply of water into the inner tub under the condition that the water level is greater than or equal to a water level threshold;
step S706: record water supply duration in a water supply process;
step S708: determine water replenish duration according to the water supply duration, and control, according to the water replenish duration, the drum washing machine to replenish water to the inner tub.

In embodiments of the present disclosure, water is supplied into the inner tub first, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water supply into the inner tub is stopped, and total water supply duration in the water supply process is recorded.

A water amount required for washing clothes this time is determined according to first water feed duration, and water replenish duration in a washing process is determined according to the water supply duration, and water may be quantitatively supplied according to a set program.

By carrying out water replenish according to a determined water replenish amount in a washing process, when clothes made of different materials and having different weight are washed, the water amount of the inner tub may always satisfy the optimal washing requirement, and a washing effect is better.

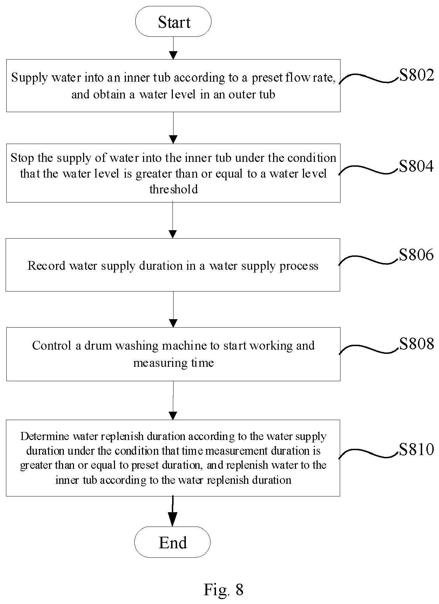

As shown in Fig. 8, an embodiment of the present disclosure provides a control method for a drum washing machine. Specifically, the control method includes:
step S802: supply water into an inner tub according to a preset flow rate, and obtain a water level in an outer tub;
step S804: stop the supply of water into the inner tub under the condition that the water level is greater than or equal to a water level threshold;
step S806: record water supply duration in a water supply process;
step S808: control a drum washing machine to start working and measuring time; and
step S810: determine water replenish duration according to the water supply duration under the condition that time measurement duration is greater than or equal to preset duration, and replenish water to the inner tub according to the water replenish duration.

Water is supplied into the inner tub according to a preset flow rate first, the water level in the outer tub is obtained, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water supply into the inner tub is stopped, and total water supply duration in the water supply process is recorded.

Then, the drum washing machine is controlled to start working and measuring time, in order words, water is supplied into the inner tub before the washing machine washes the clothes, and it is ensured that the clothes may absorb some water.

Water replenish duration is determined according to water supply duration, and according to the water replenish duration, the drum washing machine is controlled to replenish water to the inner tub. A water amount required for washing clothes this time is determined according to first water feed duration, and water replenish duration in a washing process is determined according to the water supply duration, and water may be quantitatively supplied according to a set program.

Then, under the condition that time measurement duration is greater than or equal to preset duration, the step of replenishing water to the inner tub according to water supply duration is performed, that is, water is supplied to the inner tub after a period of time, and it is ensured that the clothes completely absorbs water, that is, the clothes are in a completely wetted state, and a washing effect is better.

Since the step S808 (of controlling a drum washing machine to start working and measuring time) is before the step S810 (of determining water replenish duration according to the water supply duration, and under the condition that time measurement duration is greater than or equal to preset duration, replenishing water to the inner tub according to the water replenish duration), after the washing machine starts washing work, a processor starts determining water replenish duration and then computes a specific value of a water replenish amount.

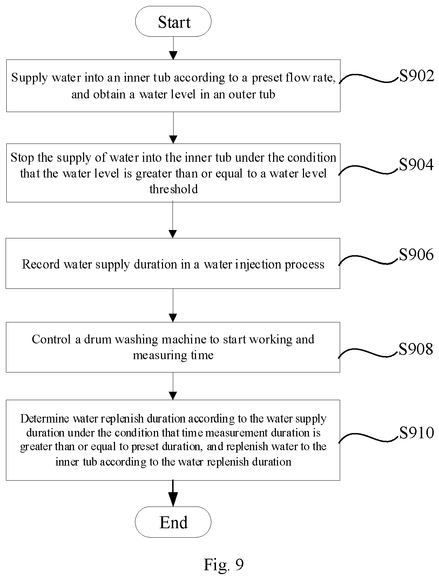

In some embodiments of the present disclosure, as shown in Fig. 9, the control method for a drum washing machine includes:
step S902: supply water into an inner tub according to a preset flow rate, and obtain a water level in an outer tub;
step S904: stop the supply of water into the inner tub under the condition that the water level is greater than or equal to a water level threshold;
step S906: record water supply duration in a water supply process;
step S908: control a drum washing machine to start working and measuring time; and
step S910: determine water replenish duration according to the water supply duration under the condition that time measurement duration is greater than or equal to preset duration, and replenish water to the inner tub according to the water replenish duration.

In embodiments of the present disclosure, a water amount required for washing clothes this time is determined according to first water feed duration, water replenish duration in a washing process is determined according to the water supply duration, and after a specific value of a water replenish amount is computed, the washing machine is started to carry out washing work.

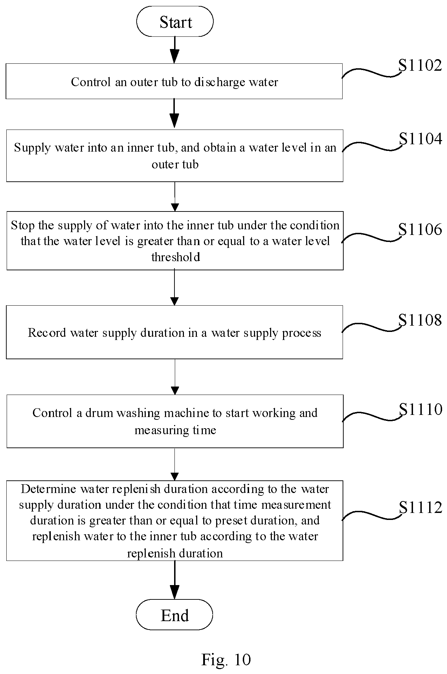

As shown in Fig. 10, an embodiment of the present disclosure provides a control method for a drum washing machine. Specifically, the control method includes:
step S1102: control an outer tub to discharge water;
step S1104: supply water into an inner tub, and obtain a water level in the outer tub;
step S1106: stop the supply of water into the inner tub under the condition that the water level is greater than or equal to a water level threshold;
step S1108: record water supply duration in a water supply process;
step S1110: control a drum washing machine to start working and measuring time; and
step S1112: determine water replenish duration according to the water supply duration under the condition that time measurement duration is greater than or equal to preset duration, and replenish water to the inner tub according to the water replenish duration.

Before water is supplied into the inner tub, the outer tub is controlled to discharge water, that is, it is ensured that the water left in the outer tub in a previous washing process is completely discharged, and this washing process may not be influenced by the previous washing process.

In addition, before the water is supplied into the inner tub, the inner tub is controlled to spin relative to the outer tub, in other words, before the water is supplied into the inner tub, the inner tub and the outer tub do not spin relative to each other.

Water is supplied into the inner tub according to a preset flow rate, the water level in the outer tub is obtained, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water supply into the inner tub is stopped, and total water supply duration in the water supply process is recorded.

Then, the drum washing machine is controlled to start working and measuring time, in order words, water is supplied into the inner tub before the washing machine washes the clothes, and it is ensured that the clothes may absorb some water.

Water replenish duration is determined according to water supply duration, and according to the water replenish duration, the drum washing machine is controlled to replenish water to the inner tub. A water amount required for washing clothes this time is determined according to first water feed duration, and water replenish duration in a washing process is determined according to the water supply duration, and water may be quantitatively supplied according to a set program.

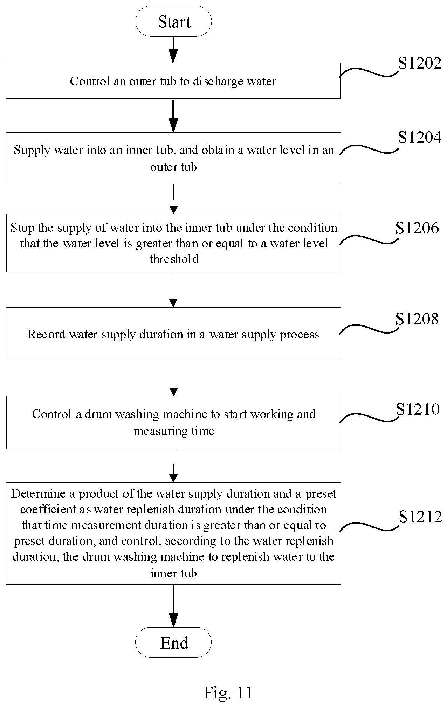

As shown in Fig. 11, an embodiment of the present disclosure provides a control method for a drum washing machine, the drum washing machine includes an inner tub and an outer tub, the inner tub is a non-porous inner tub, that is, a tub wall of the inner tub is not provided with a communication hole, the non-porous inner tub is arranged within the outer tub, and water in the non-porous inner tub may overflow into the outer tub. It can be understood that the inner tub is not in communication with the outer tub by a communication hole, and after water is supplied into the inner tub, the water in the inner tub starts overflowing outwards after reaching a certain height, and the water overflowing outwards enters the outer tub. However, the water in the outer tub may not return to the inner tub. This washing machine structure has the advantages that clothes are only washed in the inner tub, and the clothes are prevented from being polluted by dirt between the inner tub and the outer tub, and a washing effect is better.

In addition, the control method includes:
step S1202: control an outer tub to discharge water;
step S1204: supply water into an inner tub, and obtain a water level in the outer tub;
step S1206: stop the supply of water into the inner tub under the condition that the water level is greater than or equal to a water level threshold;
step S1208: record water supply duration in a water supply process;
step S1210: control a drum washing machine to start working and measuring time; and
step S1212: determine a product of the water supply duration and a preset coefficient as water replenish duration under the condition that time measurement duration is greater than or equal to preset duration, and control, according to the water replenish duration, the drum washing machine to replenish water to the inner tub.

Before water is supplied into the inner tub, the outer tub is controlled to discharge water, that is, it is ensured that the water left in the outer tub in a previous washing process is completely discharged, and this washing process may not be influenced by the previous washing process.

In addition, before the water is supplied into the inner tub, the inner tub is controlled to spin relative to the outer tub, in other words, before the water is supplied into the inner tub, the inner tub and the outer tub do not spin relative to each other.

Water is supplied into the inner tub, the water level in the outer tub is obtained, the water in the inner tub starts overflowing outwards when reaching a certain height, the water overflowing outwards enters the outer tub, and a water level sensor may be arranged on the outer tub to obtain the water level in the outer tub. When the water level in the outer tub is greater than or equal to the water level threshold, that is, the water in the outer tub reaches a preset height, water supply into the inner tub is stopped, and total water supply duration in the water supply process is recorded.

Then, the drum washing machine is controlled to start working and measuring time, in order words, water is supplied into the inner tub before the washing machine washes the clothes, and it is ensured that the clothes may absorb some water.

Water replenish duration is determined according to water supply duration, and according to the water replenish duration, the drum washing machine is controlled to replenish water to the inner tub. A water amount required for washing clothes this time is determined according to first water feed duration, and water replenish duration in a washing process is determined according to the water supply duration, and water may be quantitatively supplied according to a set program.

After the water supply duration is obtained, the water supply duration is multiplied by a preset coefficient to determine the water replenish duration. Since the flow rate of water feed in unit time is fixed, the amount of water supplied each time is fixed, in other words, in the washing process, water may be quantitatively supplied to the inner tub at intervals.

Specifically, the preset coefficient is a constant greater than 0 and less than 1. In the case of the preset coefficient being greater than 0, it is ensured that water may be quantitatively supplied on the inner tub at intervals. In the case of the preset coefficient being less than 1, it is ensured that a water replenish amount is not greater than an initial water supply amount, and waste of water is avoided.

In some implementation modes, the preset coefficient is an empirical value, and the preset coefficient may be determined according to a ratio relation between a required water replenish amount and an initial water supply amount obtained through repeated experiments before the washing machine is delivered, and is prestored in a storage medium of the washing machine.

In some other modes, the preset coefficient may be determined according to a wash mode of the washing machine, and the wash mode includes a fabric type and a weight of clothes to be washed, a corresponding detergent type, and a preset washing program, such as a spin speed of the inner tub, a spin-to-stop ratio and a washing temperature. According to different wash modes, different preset coefficients may be set, to satisfy water replenish requirements in different washing situations.

### Embodiment 3

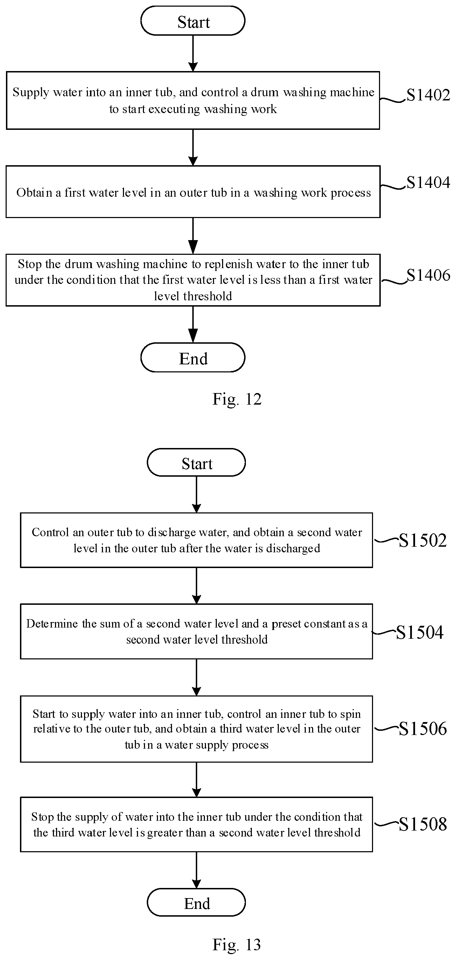

As shown in Fig. 12, a control method for a drum washing machine is shown. The drum washing machine includes an inner tub and an outer tub, the inner tub is arranged within the outer tub, and water in the inner tub may overflow into the outer tub. The control method includes:
step S1402: supply water into the inner tub, and control the drum washing machine to start executing washing work;
step S1404: obtain a first water level in the outer tub in a washing work process; and
step S1406: control the drum washing machine to replenish water to the inner tub under the condition that the first water level is less than a first water level threshold.

The drum washing machine includes the inner tub and the outer tub, and the inner tub is arranged within the outer tub. In a washing process of the drum washing machine, in order to ensure that there is sufficient water in the inner tub, water is supplied into the inner tub first, and meanwhile, the drum washing machine is controlled to perform the washing work. As water keeps being supplied into the inner tub, the water in the inner tub starts overflowing after reaching a certain amount. Since the water in the inner tub may overflow into the outer tub, a water level of the outer tub may start rising. Therefore, the drum washing machine may indirectly determine a current water level of the inner tub according to an obtained current water level of the outer tub, to control the water level of the inner tub. The water level of the outer tub during washing work is called a first water level. If the water level of the outer tub reaches a first water level threshold, it is indicated that there is a sufficient amount of water in the inner tub, it is not required to supply water to add a water amount, and washing may be normally carried out. If the first water level is less than the first water level threshold, it is indicated that little of water overflows from the inner tub into the outer tub, the water level in the inner tub is relatively low, and the water level of the inner tub may not generate a desirable washing effect of the washing work. Therefore, the drum washing machine should replenish water to the inner tub in time until the first water level reaches the first water level threshold. By obtaining the first water level of the outer tub to control water supply into the inner tub, water may be reasonably supplied into the inner tub.

The drum washing machine dynamically controls the water level in the inner tub by obtaining the first water level in the outer tub. No matter how the weight of clothes put in the inner tub changes, and no manner how different materials of the clothes put in the inner tub are, it is always ensured that the water level of the inner tub is the water level corresponding to the first water level threshold of the outer tub, and the water level in the inner tub may be kept at an optimal water level during washing work, and a washing effect is improved.

As shown in Fig. 13, in another embodiment of the present disclosure, the drum washing machine includes an inner tub and an outer tub, the inner tub is arranged within the outer tub, water in the inner tub may overflow into the outer tub, and the inner tub of the drum washing machine is a non-porous inner tub. Before the washing work is started, steps of the control method for a drum washing machine specifically include:
step S1502: control the outer tub to discharge water, and obtain a second water level in the outer tub after the water is discharged;
step S1504: determine the sum of the second water level and a preset constant as a second water level threshold;
step S1506: start to supply water into the inner tub, control the inner tub to spin relative to the outer tub, and obtain a third water level in the outer tub in a water supply process; and
step S1508: stop the supply of water into the inner tub under the condition that the third water level is greater than the second water level threshold.

Compared with a drum washing machine with a porous inner tub, there is no hole for water to directly pass through between the inner tub and the outer tub.

Before the washing work is carried out, the drum washing machine completely discharges the water from the outer tub first. Since the inner tub is a non-porous inner tub, complete water discharge from the outer tub may not affect water supply into the inner tub. After the water in the outer tub is completely discharged, the water level of the outer tub is the second water level. If the water of the outer tub may be completely discharged, the second water level is 0. If some water is left in the outer tub due to a relatively high position of a water outlet pipe of the drum washing machine or for other reasons, the second water level is greater than 0. After the water in the outer tub is completely discharged, water starts being supplied into the inner tub.

The inner tub is controlled to spin relative to the outer tub while water is supplied into the inner tub. Since the inner tub spins and an inner wall of the inner tub is not provided with a hole for leaking water, water in the inner tub is spun onto the inner wall of the inner tub due to centrifugal force, and the water level of the inner tub is declined. In an actual washing process, the inner tub is in a spin state. Therefore, if the inner tub does not spin relative to the outer tub before the washing work is started, the water level of the inner tub is the water level of the inner tub in a static state. When the drum washing machine starts the washing work, the inner tub is in a spin state. Therefore, if the inner tub does not spin before the washing work is started, the water in the inner tub starts overflowing before a sufficient amount of water is supplied into the inner tub. Therefore, before the washing work is started, the drum washing machine controls the inner tub to spin relative to the outer tub, and it is ensured that a sufficient amount of water may be supplied into the inner tub before the washing work is started, and there may be sufficient water in the inner tub during washing work.

As the drum washing machine keeps supplying water into the inner tub, after the water level of the inner tub rises to a certain height, the water in the inner tub starts overflowing into the outer tub. When the water in the inner tub overflows outwards, the water level of the water in the outer tub starts rising. In this case, the water level of the outer tub is the third water level. When the water level of the outer tub is greater than the second water level threshold, the drum washing machine stops supplying water into the inner tub. In this case, it is determined that the water level of the inner tub reaches a height corresponding to the second water level threshold, and the water in the inner tub satisfies a water amount required for washing. The second water level threshold is equal to the sum of the second water level and a preset constant. The preset constant is a water level rise amount of the outer tub due to overflow of the water in the inner tub. By setting the preset constant, a reasonable amount of water may be supplied into the inner tub before the drum washing machine carries out the washing work.

In some implementation modes, the preset constant is an empirical value, and the preset constant may be determined according to a relation between a water amount of the inner tub and a water level of the outer tub obtained through repeated experiments before the washing machine is delivered, and is prestored in a storage medium of the washing machine.

In some other modes, the preset constant may be determined according to a wash mode of the washing machine. The wash mode includes a fabric type and a weight of clothes to be washed, a corresponding detergent type, and a preset washing program, such as a spin speed of the inner tub, a spin-to-stop ratio and a wash temperature. According to different wash modes, different preset constants may be set, to satisfy water replenish requirements in different washing situations.

Since there is no hole for water to pass through between the non-porous inner tub and the outer tub, the drum washing machine with the non-porous inner tub may determine a water level situation in the inner tub by obtaining the third water level formed by water overflowing from the inner tub to the outer tub before washing work. Therefore, the water in the inner tub reaches a reasonable water level, water resources are saved, and it is ensured that there is a sufficient amount of water in a subsequent washing work process.

The second water level threshold is the water level threshold of the outer tub before the drum washing machine carries out washing work. In this case, if excessive water is supplied into the inner tub, water resources may be wasted, a detergent in the water may be diluted, and a washing effect may be affected. After the drum washing machine starts the washing work, since some of the water may be absorbed by clothes, it is required to keep a sufficient amount of water in the inner tub, and in this case the water level of the inner tub should be higher than that before the washing work. Correspondingly, the first water level threshold should be greater than the second water level threshold. Therefore, the first water level threshold is greater than the second water level threshold, and it is ensured that there is a sufficient amount of water in the inner tub in a whole washing process of the drum washing machine.

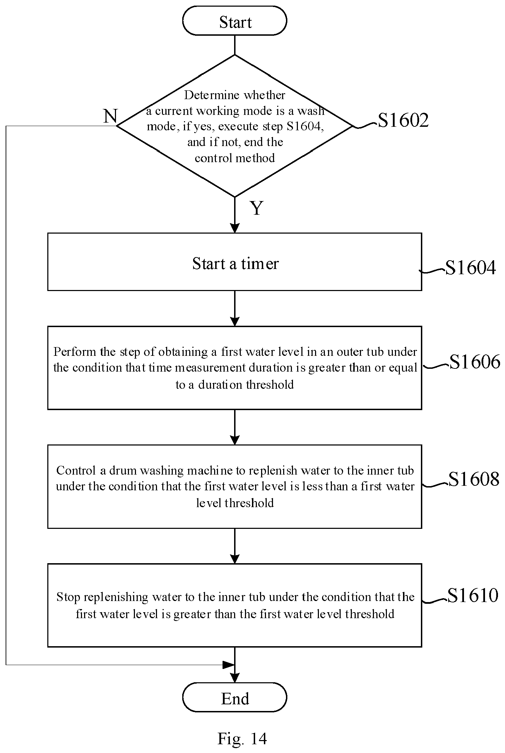

As shown in Fig. 14, in another embodiment of the present disclosure, the drum washing machine includes an inner tub and an outer tub, the inner tub is arranged within the outer tub, and water in the inner tub may overflow into the outer tub. Steps of the control method for a drum washing machine specifically include:
step S1602: determine whether a current working mode is a wash mode, if yes, execute step S1604, and if not, end the control method;
step S1604: start a timer;
step S1606: perform the step of obtaining a first water level in the outer tub under the condition that time measurement duration is greater than or equal to a duration threshold;
step S1608: control the drum washing machine to replenish water to the inner tub under the condition that the first water level is less than a first water level threshold; and
step S1610: stop replenishing water to the inner tub under the condition that the first water level is greater than the first water level threshold.

The working modes of the drum washing machine include a wash mode, a rinse mode and a dewatering mode. It can be understood that whether there is a sufficient amount of water in the inner tub in the wash mode has a direct influence on a washing effect. The effect of the other two modes, especially the dewatering mode, is relatively less related to a water amount of the inner tub. Therefore, the control method for a drum washing machine controls water replenish to the inner tub in the wash mode and it is ensured that there is a sufficient amount of water in the wash mode, and waste of water resources is avoided. Further, an overall washing effect of the drum washing machine is optimized, and water is saved.

In the embodiment, when the drum washing machine starts the washing work, water in the inner tub is absorbed by clothes, resulting in decline in water level in the inner tub. If the water level declines excessively, a washing effect of the clothes may be affected. However, the clothes do not complete absorbing water in an instant, and gradually reach a saturation state along with the washing work. After absorbing water to reach the saturation state, the clothes absorb no more water, and decline of the water level of the inner tub caused by water absorption of the clothes may not occur. Therefore, when the drum washing machine performs washing work, time is measured. When the time measurement duration is greater than or equal to the duration threshold, whether a water absorption process of the clothes is ended is determined. In this case, the drum washing machine obtains the first water level to replenish water to the inner tub. It can be understood that by setting the duration threshold of time measurement of the drum washing machine, water replenish efficiency may be improved. The situation that since water keeps being supplied, the water in the inner tub keeps overflowing to dilute a detergent, and affecting a washing effect is avoided.

According to the embodiment, after the washing work of the drum washing machine is started, and the time measurement duration is greater than or equal to the duration threshold, water replenish is started. In a subsequent washing work process, the drum washing machine stops replenishing water to the inner tub when finding the first water level of the inner tub being greater than the first water level threshold. In this way, dilution of a detergent in the water caused by excessive water replenish may be avoided, waste of water resources may be reduced, and water may be saved.

### Embodiment 4

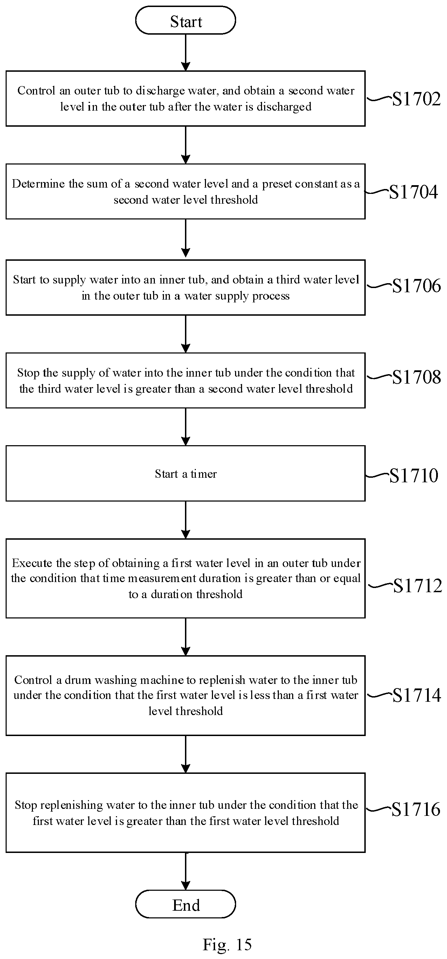

As shown in Fig. 15, a complete embodiment of the present disclosure provides a control method for a drum washing machine. The drum washing machine includes an inner tub and an outer tub, the inner tub is arranged within the outer tub, the inner tub is a non-porous inner tub, and water in the inner tub may overflow into the outer tub. A water level sensor is arranged within the outer tub to sense a current water level of the outer tub. In a drum washing machine with a non-porous inner tub, a front end of the inner tub is provided with a clothes entrance, which is not completely sealed. When water is supplied for the inner tub to a certain amount, the water in the inner tub may overflow.

Steps of the control method for a drum washing machine specifically include:
step S1702: control the outer tub to discharge water, and obtain a second water level in the outer tub after the water is discharged;
step S1704: determine the sum of the second water level and a preset constant as a second water level threshold;
step S1706: start to supply water into an inner tub, and obtain a third water level in the outer tub in a water supply process;
step S1708: stop the supply of water into the inner tub under the condition that the third water level is greater than the second water level threshold;
step S1710: start a timer;
step S1712: execute the step of obtaining a first water level in the outer tub under the condition that time measurement duration is greater than or equal to a duration threshold;
step S1714: control the drum washing machine to replenish water to the inner tub under the condition that the first water level is less than a first water level threshold; and
step S1716: stop replenishing water to the inner tub under the condition that the first water level is greater than the first water level threshold.

Before the drum washing machine starts a washing process, through the control method for a drum washing machine, the water in the outer tub is discharged first, and the water level of the outer tub obtained by the drum washing machine at the moment is recorded as h0 (that is, the second water level). Since the inner tub is a non-porous inner tub, complete water discharge from the outer tub may not affect water supply into the inner tub. If the water of the outer tub may be completely discharged, the second water level is 0. If some water is left in the outer tub due to a relatively high position of a water outlet pipe of the drum washing machine or for other reasons, the second water level is greater than 0.

After the water in the outer tub is completely discharged, water starts being supplied into the inner tub. When water is supplied into the inner tub, the inner tub is required to be controlled to spin relative to the outer tub, and a water absorption speed of clothes in the drum is accelerated, the clothes in the inner tub are quickly soaked, and it is ensured that a water supply level is less affected by a water absorption process of the clothes.

When the water in the inner tub increases to a certain extent, the water starts overflowing. The water level of the outer tub starts rising. In this case, the water level of the outer tub is h0 (that is, the second water level). As water keeps being supplied into the inner tub, the water level of the water overflowing from the inner tub to the outer tub is gradually increased, and the water level of the outer tub keeps being increased. In this case, the water level of the outer tub is h0+△h (that is, a third water level), where △h is an increased water level of the outer tub.

The inner tub of the drum washing machine is a non-porous inner tub. Compared with a drum washing machine with a porous inner tub, there is no hole for water to directly pass through between the inner tub and the outer tub. Before the washing work is carried out, the drum washing machine completely discharges the water from the outer tub first. Since the inner tub is a non-porous inner tub, complete water discharge from the outer tub may not affect water supply into the inner tub. After the water in the outer tub is completely discharged, the water level of the outer tub is h0. If the water of the outer tub may be completely discharged, h0 is 0. If some water is left in the outer tub due to a relatively high position of a water outlet pipe of the drum washing machine or for other reasons, h0 is greater than 0. After the water in the outer tub is completely discharged, water starts being supplied into the inner tub. As the drum washing machine keeps supplying water into the inner tub, after the water level of the inner tub rises to a certain height, the water in the inner tub starts overflowing into the outer tub. When the water in the inner tub overflows outwards, the water level of the water in the outer tub starts rising. In this case, the water level of the outer tub is h0+△h. When the water level of the outer tub is greater than the second water level threshold, the drum washing machine stops the supply of water into the inner tub. In this case, it is determined that the water level of the inner tub reaches a height corresponding to the second water level threshold, and the water in the inner tub satisfies a water amount required for washing. The second water level threshold is equal to the sum of h0 and a preset constant. The preset constant is a water level rise amount of the outer tub due to overflow of the water in the inner tub. By setting the preset constant, a reasonable amount of water may be supplied into the inner tub before the drum washing machine carries out the washing work.

Since there is no hole for water to pass through between the non-porous inner tub and the outer tub, the drum washing machine with the non-porous inner tub may determine a water level situation in the inner tub by obtaining h0+△h formed by water overflowing from the inner tub to the outer tub before washing work. Therefore, the water in the inner tub reaches a reasonable water level, water resources are saved, and it is ensured that there is a sufficient amount of water in a subsequent washing work process.

After the water level sensor arranged on the outer tub senses that the water amount of the outer tub reaches the water level h0+h, water feed is stopped, where h is a preset constant, and h0+h is a second water level threshold. When h0+△h is greater than h0+h, water feed of the inner tub is stopped. The drum washing machine may determine that there is a sufficient amount of water in the inner tub currently, water supply into the inner tub is not required, and subsequent washing work may be started.

In this case, the drum washing machine starts a timer to start measuring time of the washing work. The reason is that when the drum washing machine starts the washing work, water in the inner tub is absorbed by clothes, resulting in decline in water level in the inner tub. If the water level declines excessively, a washing effect of the clothes may be affected. However, the clothes do not complete absorbing water in an instant, and gradually reach a saturation state along with the washing work. After absorbing water to reach the saturation state, the clothes absorb no more water, and decline of the water level of the inner tub caused by water absorption of the clothes may not occur. Therefore, when the drum washing machine performs washing work, time starts being measured. When the washing work is carried out for 15 min, the drum washing machine obtains h0+△h. (Since the drum washing machine is in a washing work state, in this case, the h0+△h is the first water level.) H0+△h is compared with H (that is, a first water level threshold). If h0+△h<H, it is required to replenish water to the inner tub, otherwise, it is not required to replenish water to the inner tub until h0+△h≥H.

In a washing process of the drum washing machine, in order to ensure that there is sufficient water in the inner tub, water is supplied into the inner tub first, and meanwhile, the drum washing machine is controlled to perform the washing work. In a washing work process, the drum washing machine may obtain the water level from the outer tub. The drum washing machine may indirectly determine a current water level of the inner tub according to an obtained current water level of the outer tub, to control the water level of the inner tub. In the washing process of the drum washing machine, the water is driven by the inner tub due to spin of the inner tub, and some water is spun onto an inner wall of the inner tub by centrifugal force, and in the situation of the same water amount, the water level of the inner tub is different from the water level during non-washing work. Therefore, in the situation of the same water amount in the inner tub, the amount of water overflowing to the outer tub is further different from the amount of water overflowing during non-washing work, and finally the water level formed in the outer tub is different from the water level during non-washing work. The water level of the outer tub during washing work is called a first water level. If the first water level is less than the first water level threshold, it is indicated that little of water overflows from the inner tub into the outer tub, the water level in the inner tub is relatively low, and the water level of the inner tub may not generate a desirable washing effect of the washing work. Therefore, the drum washing machine should replenish water to the inner tub in time until the first water level reaches the first water level threshold. In this case, according to the water level in the inner tub, the clothes may be fully wetted, and an optimal washing effect is achieved. The drum washing machine dynamically controls the water level in the inner tub by obtaining the first water level in the outer tub. No matter how the weight of clothes put in the inner tub is changed, and no manner how different materials of the clothes put in the inner tub are, it is always ensured that the water level of the inner tub is the water level corresponding to the first water level threshold of the outer tub, and the water level in the inner tub may be kept at the optimal water level during washing work, the problem of influence on the water level of the inner tub caused by water absorption of different materials of the clothes is solved, and waste of water resources caused by excessive water supply is avoided.

### Embodiment 5

As shown in Fig. 16, an embodiment of the present disclosure provides a drum washing machine 1800 including a memory 1830 and a processor 1840. The memory 1830 is configured to store a computer program. The processor 1840 is configured to implement the control method for a drum washing machine 1800 when executing the computer program. By keeping quantitatively replenishing water in a washing process, loads having different weights and made of different materials may be satisfied, that is, clothes may be fully wetted, and a washing effect is better.

In addition, the drum washing machine 1800 further includes an outer tub 1810 and an inner tub 1820. The inner tub 1820 is a non-porous inner tub 1820, the inner tub 1820 is rotatably arranged within the outer tub 1810, and water in the inner tub 1820 may overflow into the outer tub 1810. It can be understood that the inner tub 1820 is not in communication with the outer tub 1810 by a communication hole, and after water is supplied into the inner tub 1820, the water in the inner tub 1820 starts overflowing outwards after reaching a certain height, and the water overflowing outwards enters the outer tub 1810. An original water level in the outer tub 1810 is h0, and a water level is changed by Δh. This washing machine structure has the advantages that clothes are only washed in the inner tub 1820, and the clothes are prevented from being polluted by dirt between the inner tub and the outer tub 1810, and a washing effect is better.

Specifically, after the water level sensor arranged on the outer tub senses that the water amount of the outer tub reaches the water level h0+h, water feed is stopped. After washing is carried out for t (<15) min, the water level sensor senses whether the water level of the outer tub is higher than a water level H (the water level H > the water level (h0 +△h)). If the water level is higher than the water level H, it is indicated that more water in the inner tub overflows into the outer tub, there is a sufficient amount of washing water in the inner tub, and water feed is not required. If the water level is lower than the water level H, it is indicated that less water overflows from the inner tub into the outer tub, there is no sufficient amount of water fed into the inner tub for the first time, and water replenish is required. In this case, water keeps being supplied into the inner tub until the water level of the outer tub reaches the water level H. H is the first water level threshold.

### Embodiment 6

An embodiment of the present disclosure provides a computer-readable storage medium, and the computer program may implement a control method for a drum washing machine when executed by a processor. A water amount required for washing clothes this time is determined according to first water feed duration, and water replenish duration in a washing process is determined according to the water supply duration, and water may be quantitatively supplied according to a set program.

By keeping quantitatively replenishing water in a washing process, loads having different weights and made of different materials may be satisfied, that is, clothes may be fully wetted.

The embodiments of the present disclosure are described in detail above in combination with accompanying drawings. By setting the duration threshold, after the washing duration is greater than or equal to the duration threshold, water replenish work is carried out. This method may solve the problem of when to replenish water, that is, whether to replenish water. It can be understood that after washing is carried out for a certain period of time, a water feed step is executed again, to replenish water.

In the description of the present disclosure, term "plurality of" means two or more, unless otherwise explicitly defined. Orientation or positional relations indicated by terms "up", "down", etc. are based on orientation or positional relations shown in accompanying drawings, are merely for facilitating the description of the present disclosure and simplifying the description, rather than indicating or implying that a device or unit referred to must have a particular orientation or be constructed and operated in a particular orientation, and therefore cannot be understood as limiting the present disclosure. Terms "connection", "installation" and "fixation" should be understood in a broad sense. For example, the "connection" can be a fixed connection, a detachable connection, or an integrated connection; and can be a direct connection, or an indirect connection by an intermediate medium. For those of ordinary skill in the art, the specific meanings of the above terms in the present disclosure can be understood according to specific circumstances.

In the description of the present disclosure, terms "an embodiment", "some embodiments", "particular embodiments", etc. mean that a specific feature, structure, material or characteristic described in combination with the embodiment or example is included in at least one embodiment or example of the present disclosure. In the present disclosure, the schematic expressions of the above terms do not certainly refer to the same embodiment or example. Moreover, the specific features, structures, materials or characteristics described can be combined in a suitable manner in any one or more embodiments or examples.

What are described above are merely preferred embodiments of the present disclosure, and are not intended to limit the present disclosure, and various modifications and changes can be made on the present disclosure by those skilled in the art. Any modification, equivalent substitution, improvement, etc. within the spirit and principles of the present disclosure should fall within the scope of protection of the present disclosure.

## Claims

1. A control method for a drum washing machine, wherein the drum washing machine comprises an inner tub and an outer tub, the inner tub is arranged within the outer tub, such that water in the inner tub overflows into the outer tub; and the control method comprises: controlling the drum washing machine to perform washing work, and obtaining corresponding washing duration; and controlling the outer tub to discharge water under the condition that the washing duration is greater than or equal to a duration threshold, and replenishing water to the inner tub.

2. The control method for a drum washing machine according to claim 1, wherein the inner tub is a non-porous inner tub; and the replenishing water to the inner tub specifically comprises: keeping replenishing water to the inner tub, and obtaining a first water level in the outer tub; and stopping replenishing water to the inner tub under the condition that the first water level is greater than or equal to a first water level threshold.

3. The control method for a drum washing machine according to claim 2, wherein the control of discharging water from the outer tub and replenishing water to the inner tub specifically comprise: controlling the outer tub to discharge water, and obtaining a second water level in the outer tub; and controlling the outer tub to stop discharging water under the condition that the second water level is less than a second water level threshold, and starting replenishing water to the inner tub until a water level in the outer tub is greater than or equal to the first water level threshold.

4. The control method for a drum washing machine according to any one of claims 1to 3, wherein before controlling the drum washing machine to perform washing work, the control method further comprises: controlling the outer tub to discharge water; and supplying water into the inner tub, and controlling the inner tub to spin relative to the outer tub.

5. The control method for a drum washing machine according to claim 4, wherein the working modes of the drum washing machine comprise a wash mode, a rinse mode and a dewatering mode, and performing the step of replenishing water to the inner tub during the wash mode.

6. The control method for a drum washing machine according to claim 3, wherein the first water level threshold is greater than the second water level threshold.

7. The control method for a drum washing machine according to claim 5 or 6, wherein the step of keeping supplying water to the inner tub specifically comprises: keeping supplying water into the inner tub according to a set flow rate.

8. A drum washing machine, comprising: a memory, configured to store a computer program; and a processor, configured to execute the computer program to implement the control method for a drum washing machine of any one of claims 1 to 7.

9. The drum washing machine according to claim 8, further comprising: an outer tub with a water level sensor; and an inner tub rotatably arranged inside the outer tub, such that water in the inner tub overflows into the outer tub; wherein the inner tub is a non-porous inner tub.

10. A computer-readable storage medium, with a computer program stored thereon, wherein the computer program is executed by a processor, the control method for a drum washing machine of any one of claims 1 to 7 is implemented.
